(19) Europäisches Patentamt
European Patent Office
Office européen des brevets

(11) **EP 2 423 707 B1**

(12) **EUROPEAN PATENT SPECIFICATION**

(45) Date of publication and mention
of the grant of the patent:
**17.04.2013 Bulletin 2013/16**

(51) Int Cl.:
**G01S 15/10** *(2006.01)*    **G01S 7/527** *(2006.01)*

(21) Application number: **10174029.8**

(22) Date of filing: **25.08.2010**

(54) **A method for determining the echo distance in an acoustic pulse-echo ranging system**

Verfahren zur Bestimmung des Echoabstands in einem akustischen Impulsechomesssystem

Procédé pour déterminer la distance d'écho dans un système par impulsion écho-acoustique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**29.02.2012 Bulletin 2012/09**

(73) Proprietor: **Siemens Aktiengesellschaft**
**80333 München (DE)**

(72) Inventors:
• **Ferreira, Edson**
**Peterborough K9K 2R2 (CA)**
• **Larocque, Jean-René**
**Peterborough, ON K9J 8E1 (CA)**

(74) Representative: **Maier, Daniel Oliver**
**Siemens AG**
**Postfach 22 16 34**
**80506 München (DE)**

(56) References cited:
**EP-A1- 2 110 648      EP-A2- 1 628 119**
**US-A- 5 587 969        US-B1- 7 334 470**
**US-B2- 6 856 576**

• **BILLUR BARSHAN ET AL: "Fast processing techniques for accurate ultrasonic range measurements", MEASUREMENT SCIENCE AND TECHNOLOGY, IOP, BRISTOL, GB, vol. 11, no. 1, 1 January 2000 (2000-01-01), pages 45-50, XP020062849, ISSN: 0957-0233, DOI: DOI: 10.1088/0957-0233/11/1/307**

## Description

The present invention relates to a method for determining the echo distance in an acoustic pulse-echo ranging system, said method comprising the steps of:

- transmitting an acoustic pulse having a carrier frequency,
- receiving an echo from said acoustic pulse, and
- sampling and digitizing said received echo at a sampling frequency higher than twice said carrier frequency.

Such a method is known from US 7,334,470.

In level measurement applications, pulse-echo ranging systems, also known as time-of-flight ranging systems, are commonly used for determining the distance to a target object (e. g. reflective surface of a material in a container) by measuring how long after transmission of a burst of energy pulses the reflected pulses or echoes are received. Such devices typically use ultrasonic pulses or pulsed radar or microwave signals.

Acoustic pulse-echo ranging systems generally include a transmitter for transmitting the energy pulses and a receiver for receiving the reflected energy pulses or echoes. The transmitter and receiver may be combined in a single unit. An echo profile is generated from the received energy pulses by amplifying, filtering and envelope shaping, wherein in some point an analog-to-digital conversion is performed. Echo pulses are identified in the digital echo profile by a signal processor, and the distance or range of the target is calculated based on the transmit times of the transmitted energy pulses and the identified echo pulses. The calculated distance or range is then transmitted via a communication network to a process control system using a communications protocol such as analog 4-20 mA, HART, PROFIBUS or FOUNDATION Fieldbus.

From the above-mentioned US 7,334,470 an acoustic pulse-echo ranging system is known, which has a fully digital receiver. The raw echo data are digitized directly, i.e. without prior analog filtering, at high speed and then digitally processed to generate distance measurement. The digital processing comprises buffering, low pass filtering, bandpass filtering, envelope detecting, resampling, logarithmic amplifying, scaling and echo processing.

US 6,856,576 discloses an echo processing method using autocorrelation. The raw echo data are sampled, digitized and high-pass filtered. A correlation signal is created by adding the filtered signal to a copy of the filtered signal shifted by a time unit. A set of correlation signals is created by repeating the process for a range of time units corresponding to a set of sequential sample points. The correlation signal having the highest correlation strength is identified, and the time shift used to create it is identified as the time of flight of the echo pulse.

Raw echo data which are sampled and digitized at a high sampling frequency without prior analog filtering contain maximum information such as phase information, presence of multiple frequencies, etc. This information, however, will be lost if the digitized raw data are filtered or smoothed during their further digital processing.

On the other hand, correlation of a high-resolution acoustic echo pulse in the form of an amplitude modulated carrier with a similar wave form results in another amplitude modulated signal which is just as complex to evaluate. Thus, direct correlation will not help any further.

It is therefore an object of the invention to address this problem.

According to the invention this problem is solved by the method initially defined which is characterized by the further steps of:

- providing a digital expected echo shape with a time resolution higher than twice the carrier frequency,
- creating correlation values from said digitized received echo and said digital expected echo shape,
- weighting said correlation values by emphasizing stronger correlation values, and
- determining the echo distance from the center of mass of the weighted values.

Preferred embodiments of the invention are defined in the remaining claims.

The invention will be now described in more detail with reference to preferred embodiments shown by way of nonlimiting example in the attached drawings, wherein:

Figure 1    is a block diagram of an acoustic pulse-echo ranging system in which the method of the present invention may be advantageously employed,

Figure 2    shows sampled received echo of an acoustic transmit pulse,

Figure 3    shows an expected waveform of the echo, and

Figure 4    shows a correlation result from the sampled received echo and its expected waveform.

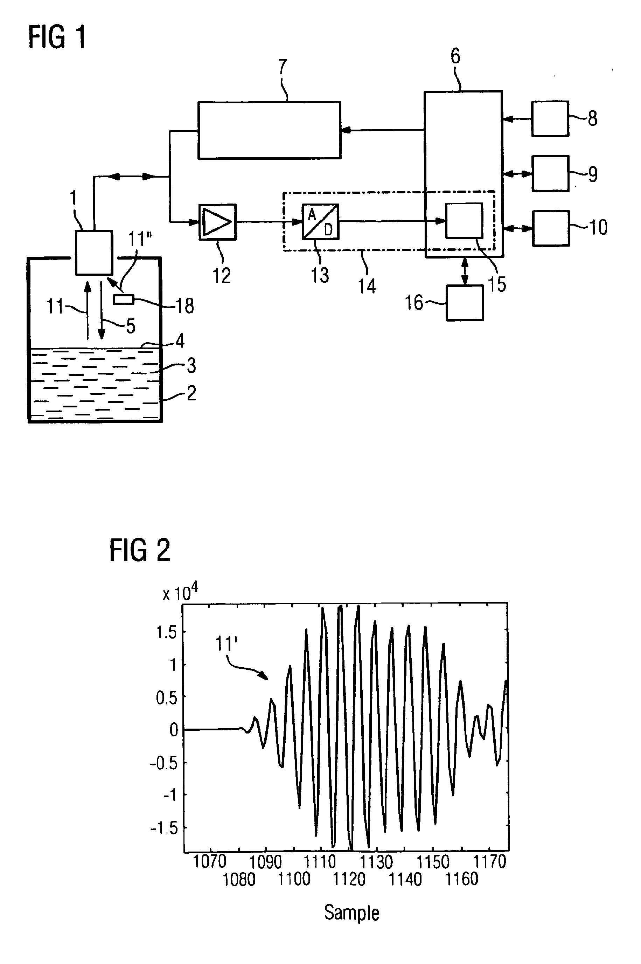

Referring to Figure 1, an acoustic pulse-echo ranging system comprises an ultrasonic transducer 1 which is installed in a tank 2 containing a liquid 3, or other type of material, with a level determined by the top surface 4 of the liquid 3. The top surface 4 of the liquid 3 provides a reflective surface which reflects ultrasonic pulses 5 generated by the transducer 1. The transducer 1 is coupled to a microprocessor 6 through a transmitter 7. The microprocessor 6 operates under a control program stored in read-only memory (ROM) 8, utilizing parameters stored in non-volatile random access memory (NVRAM) 9, and provided with a working memory in the form of random access memory (RAM) 10.

The microprocessor 6 controls the transmitter 7 to excite the transducer 1 to emit the ultrasonic pulses 5 at predetermined points in time and with predetermined frequency and amplitude. The reflected or echo pulse 11 is received by the transducer 1 and converted to an electric signal which may be first amplified in an amplifier 12 before it is sampled and digitized by an analog-to-digital converter 13. The analog-to-digital converter 13 is an input portion of a digital receiver 14 whose remaining portion is implemented in the microprocessor 6 in the form of software modules 15. The microprocessor 6 executes an algorithm, as will be described below, to determine the echo distance or time-of-flight and thus the level of the liquid 3 in the tank 2. An interface 16, controlled by the microprocessor 6, provides for the export of level-related data and the import of operating parameters. Data may be exported in the form of a display, telemetry (e.g. bus) signals, and/or alarm signals.

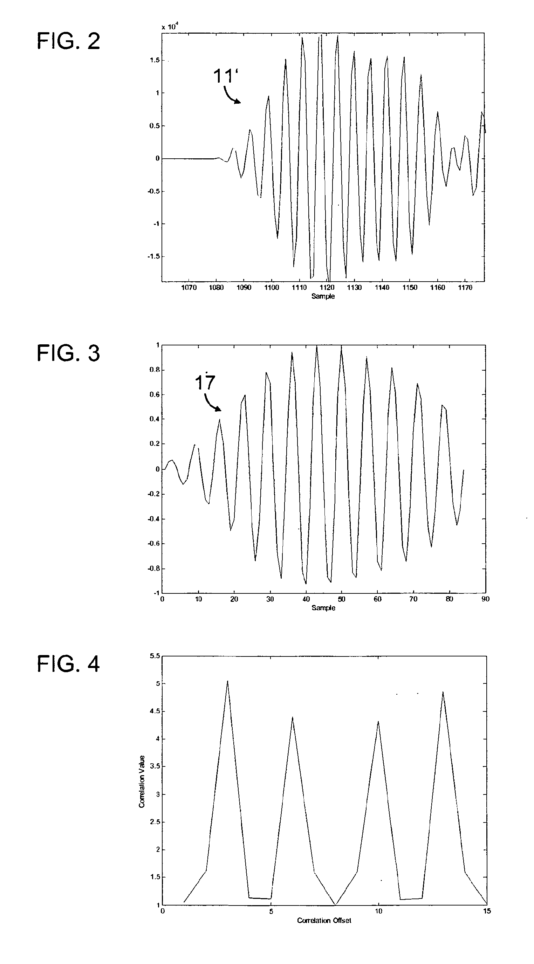

Figure 2 shows an example of the sampled received raw echo 11' in a window around the peak value of a sequence of sample values. The values are connected by a polygon line for easier visibility. The transmit pulse 5 and thus its echo 11 are in the form of an amplitude modulated carrier having a carrier frequency of, e.g., 44 KHz. The raw echo 11 is sampled at a sampling frequency of, e.g., 325 KHz.

Figure 3 shows an example of the expected echo shape or waveform 17. The expected echo shape 17 may be equal or similar to the transmit pulse 5 and therefore may be created by the microprocessor 6 which controls the transmit pulse generating transmitter 7. Alternatively, the expected echo shape 17 may be derived and stored from a digitized echo 11" which is received from a reference target 18 (Figure 1).

In the microprocessor 6 (software modules 15) the echo distance or time-of-flight is calculated by correlating the digitized received echo 11' and said digital expected echo shape 17 and determining the echo distance from the center of mass of the obtained correlation function. Comparing the two Figures 2 and 3, one can easily predict that the correlation will be strong for many offsets. Thus, the correlation of the two similar amplitude modulated carriers 11' and 17 would result in another similar amplitude modulated signal which is just as complex to evaluate would make no difference to using the center of mass of the received echo 11' itself.

The approach of the present invention is to weight the obtained correlation values with coefficients that emphasize the location of strong correlation. In the present example, the typical center of mass equation is changed to include weights $W_k$:

$$\theta = \frac{\sum_{k=0}^{D} kT_s \cdot w_k}{\sum_{k=0}^{D} w_k} \, ,$$

where D is the maximum lag possible (from a reference position), $T_s$ is the sampling interval. Position k is given the importance $W_k$ and the weights $W_k$ are calculated in the correlation domain:

$$w_k = \exp\left( [C(kT_s) - p] / \sigma_D^2 \right) \, ,$$

where $C(kT_s)$ is the correlation function evaluated at lag $(kT_s)$, the other parameter being design parameters.

The parameter p is simply a normalizing parameter that could be absorbed in the sum of the denominator but we keep it in the numerator to condition the exponential term (avoid very large numbers). The variance term is also used to condition the weights $W_k$. With this modified center of mass equation, the weights are exaggerated when the correlation is strong, and small weights tend to get reduced to zero (by the exponential).

It should be noted that there are many other functions possible which are the inverse of a compression function and progressively weight the correlation values $C(kT_s)$, e.g.:

$$w_k = [C(kT_s)]^n, \quad n \geq 2 \, .$$

The calculation of the center of mass equation may be simplified by zeroing all correlation values which are below a threshold.

The method according to the invention has the ability of determining the position of the echo 11 within the resolution of the sampling interval, and takes advantage of the whole data available. It is very accurate in nature, and can estimate the echo distance with a variation of less than $\pm$ 0.5 sample which for the above-mentioned sampling frequency of 325 KHz corresponds 1 mm.

The new method requires the knowledge of the transmitted pulse 5 to perform the calculation of the correlation function. Therefore, it is slightly sensitive to pulse shape, particularly phase or frequency distortion. To reduce the sensitivity to phase distortion and frequency distortion, it is advantageous to interpolate the received sequence. This is easily achieved by filtering a padded sequence.

Figure 4 shows the correlation result from the sampled received echo 11' and its expected waveform 17, and one can see the harmonic behaviour of the correlation result that is described above: it looks like cycles, just like the sampled received echo 11' itself and the correlation is strong a multiple intervals. Its center of mass, here offset 7, corresponds to the correct echo distance.

## Claims

1. A method for determining the echo distance in an acoustic pulse-echo ranging system, said method comprising the steps of:

   - transmitting an acoustic pulse (5) having a carrier frequency,
   - receiving an echo (11) from said acoustic pulse (5), and
   - sampling and digitizing said received echo (11) at a sampling frequency higher than twice said carrier frequency,

   **characterized by** the further steps of:

   - providing a digital expected echo shape (17) with a time resolution higher than twice the carrier frequency,
   - creating correlation values from said digitized received echo (11') and said digital expected echo shape (17),
   - weighting said correlation values by emphasizing stronger correlation values, and
   - determining the echo distance from the center of mass of the weighted values.

2. The method according to claim 1, wherein said correlation values are progressively weighted.

3. The method according to claim 2, wherein said correlation values are exponentially weighted.

4. The method according to claim 1, 2 or 3, wherein correlation values below a threshold are zeroed.

5. The method according to claim 1, 2, 3 or 4, wherein the expected echo shape (17) is directly derived and stored from an acoustic pulse (5) to be transmitted.

6. The method according to claim 1, 2, 3 or 4, wherein the expected echo shape (17) is derived and stored from a digitized echo (11") which is received from a reference target (18).

## Patentansprüche

1. Verfahren zum Bestimmen der Echodistanz in einem akustischen Impulsecho-Entfernungsbestimmungssystem, wobei das Verfahren die folgenden Schritte umfasst:

   - Senden eines akustischen Impulses (5), der eine Trägerfrequenz aufweist,
   - Empfangen eines Echos (11) von dem akustischen Impuls (5) und
   - Abtasten und Digitalisieren des empfangenen Echos (11) mit einer Abtastfrequenz, die höher als zweimal die Trägerfrequenz ist,

   **gekennzeichnet durch** die folgenden weiteren Schritte:

   - Bereitstellen einer digitalen erwarteten Echoform (17) mit einer Zeitauflösung, die höher als zweimal die Trägerfrequenz ist,
   - Erzeugen von Korrelationswerten aus dem digitalisierten empfangenen Echo (11') und der digitalen erwarteten Echoform (17),
   - Gewichten der Korrelationswerte **durch** Betonung von stärkeren Korrelationswerten und
   - Bestimmen der Echodistanz aus dem Schwerpunkt der gewichteten Werte.

2. Verfahren nach Anspruch 1, wobei die Korrelationswerte progressiv gewichtet werden.

3. Verfahren nach Anspruch 2, wobei die Korrelationswerte exponentiell gewichtet werden.

4. Verfahren nach Anspruch 1, 2 oder 3, wobei Korrelationswerte unter einer Schwelle genullt werden.

5. Verfahren nach Anspruch 1, 2, 3 oder 4, wobei die erwartete Echoform (17) aus einem zu sendenden akustischen Impuls (5) direkt abgeleitet und gespeichert wird.

6. Verfahren nach Anspruch 1, 2, 3 oder 4, wobei die erwartete Echoform (17) aus einem digitalisierten Echo (11"), das von einem Referenzziel (18) empfangen wird, abgeleitet und gespeichert wird.

## Revendications

1. Procédé de détermination de la distance d'écho dans un système acoustique de télémétrie par écho d'impulsion, le procédé comprenant les stades dans lesquels :

   - on émet une impulsion ( 5 ) acoustique ayant une fréquence porteuse,
   - on reçoit un écho ( 11 ) de cette impulsion ( 5 ) acoustique, et
   - on échantillonne et on numérise l'écho ( 11 ) reçu à une fréquence d'échantillonnage plus haute que deux fois la fréquence porteuse,

**caractérisé par** les autres stades, dans lesquels :

- on procure une forme ( 17 ) numérique d'écho escompté ayant une résolution dans le temps plus grande que deux fois la fréquence porteuse,
- on crée des valeurs de corrélation d'écho ( 11' ) reçues numérisées et de la forme ( 17 ) numérique d'écho escompté,
- on pondère des valeurs de corrélation en mettant l'accent sur des valeurs de corrélation plus grandes, et
- on détermine la distance d'écho à partir du barycentre des valeurs pondérées.

2. Procédé suivant la revendication 1, dans lequel on pondère progressivement les valeurs de corrélation.

3. Procédé suivant la revendication 2, dans lequel on pondère exponentiellement les valeurs de corrélation.

4. Procédé suivant la revendication 1, 2 ou 3, dans lequel on égale à zéro les valeurs de corrélation en dessous d'un seuil.

5. Procédé suivant la revendication 2, 3 pu 4, dans lequel on déduit et on mémorise la forme ( 17 ) d'écho escompté directement d'une impulsion ( 5 ) acoustique à émettre.

6. Procédé suivant la revendication 1, 2, 3 ou 4 dans lequel on déduit et on mémorise la forme ( 17 ) d'écho escompté d'un écho ( 11" ) numérisé, qui est reçu d'une cible ( 18 ) de référence.

# FIG 1

# FIG 2

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7334470 B

- US 6856576 B